# EUROPEAN PATENT APPLICATION

(11) **EP 4 614 802 A1**
(43) Date of publication of application: **10.09.2025**
(21) Application number: 24161899.0
(22) Date of filing: 06.03.2024
(51) Int. Cl.: H02P 29/024, G05B 23/02

(54) **A METHOD FOR TRACKING THE TIME OF A DRIVE OUTSIDE LIMITS**

(71) Applicant: ABB SCHWEIZ AG, 5400 Baden (CH)
(72) Inventor: Orkisz, Michal, 31-352 Krakow (PL); Joerg, Pieder, 7013 Domat/Ems (CH)
(74) Representative: AOMB Polska Sp. z.o.o.

(57) **Abstract**

The present disclosure relates to systems and methods for tracking and interpreting the time a drive spends outside specified limits of operation. The invention discloses a method for tracking the time of a drive outside limits comprising of: a)obtaining a value and a number of data which is suitable to describe an actual state of various limits, b) counting a total number of clock cycles, c) receiving a fraction of time, the drive spends operating within or at predefined limits, and a fraction of time the drive spends operating outside predefined limits, d) accumulating data values which are beyond predefined limits, e) tracking data values which are beyond predefined limits, f) analyzing trends and changes of an obtained data in fixed time intervals to detect correlation between values and their predefined limits, g) indicating a corrective action.

## Description

### TECHNICAL FIELD

The present disclosure relates to systems and methods for tracking and interpreting the time a drive spends outside specified limits of operation. More specifically, the subject matter of the present invention racking the operating limits of the drive, fraction of time a drive spends with any of the limits active, as well as the total fraction of time the drive spends operating outside the normal zone.

### BACKGROUND ART

An induction motor converts electrical energy into mechanical energy. Converting the energy is based on electromagnetic induction. When a drive system operates, it is significant to stay within specified maximal or minimal limits of operation. The limits apply to speed, current, torque, temperatures, process variables, etc. A drive powering an electric induction motor is becoming more popular way to convert energy comparing to Direct-On-Line operation. It causes energy savings.

Document JPH06106035B2 discloses torque limiting system for voltage type variable voltage variable frequency inverter. The purpose of this document is to eliminate the possibility of start failure due to insufficient starting torque by starting a motor at the maximum torque irrespective of an error even if the error occurs in a judgement whether it is a power mode or a regeneration mode in case of starting the motor. When a motor is started, a torque limiting value changeover switch always selects a power drive torque limiting value when a detection signal of motor zero detecting means is motor speed zero even if a judgement of power drive/regeneration mode discriminating means is power mode or regeneration mode. Thus, the motor can be started at the maximum torque capable of outputting from an inverter.

Document KR20100039414A discloses a rotating electric machine control system which, in a hybrid system including a pair of rotating electric machines for receiving power supply from a common battery, one rotating electric machine serving as a generator and the other rotating electric machine serving as a motor, ensures protection of an area from the battery to an inverter by preventing an over current from flowing. The rotating electric machine control system comprises a torque restricting means for restricting the output torque of the rotating electric machine, and a battery power sudden change predicting means for predicting a sudden-change state in which the battery power changes suddenly on the basis of at least one of the rate of change of the battery power and the rate of change of the rotational speed of the rotating electric machine. The torque restricting means changes the form of restriction on the output torque in a non-sudden change state in which the battery power does not change suddenly, when the sudden change state is predicted by the battery power sudden change predicting means.

Document CN101682290A discloses a rotating electric machine control system comprising a direct-current power supply, a rotating electric machine, an inverter for controlling current flowing through the rotating electric machine and a control device for determining the required number of revolutions that is the number of revolutions required for the rotating electric machine and a required torque that is a torque required, wherein the inverter operates according to the required number of revolutions and the required torque. The rotating electric machine control system further comprises a torque limiting means for limiting the torque of the rotating electric machine. The torque limiting means changes the mode of torque limiting control, depending on an inverter voltage (Vc) applied to a frequency conversion unit included in the inverter.

In order to achieve full energy savings potential, a control system of the drive must be well tuned. Drive systems that are tuned beyond the optimal can waste energy. Poorly tuned drives can affect machine performance, product quality and waste significant energy. An indication of the control system not being well tuned, is an exceeding of the limits. A drive operating outside the limits is not able to nimbly respond to control requests. In order to diagnose the situation, tracking the amount of time the drive spends in the limiting zone would be appreciated. Obtaining knowledge which particular one limit is exceeded is important diagnostic information. It is known to track the instantaneous values of a sophisticated system of limits by examining the bitfields of appropriate drive signals. However, it is hard to estimate the fraction of time that each of these limits is active.

### SUMMARY OF THE INVENTION

It is the objective of the present invention to provide a method estimating exceeded limits of drive's performance.

According to a first aspect of the present invention there is provided a method for tracking the time of a drive outside limits comprising of:
a) obtaining a value and a number of data which is suitable to describe an actual state of various limits,
b) counting a total number of clock cycles,
c) receiving a fraction of time, the drive spends operating within or at predefined limits, and a fraction of time the drive spends operating outside predefined limits,
d) accumulating data values which are beyond predefined limits,
e) tracking data values which are beyond predefined limits,
f) analyzing trends and changes of an obtained data in fixed time intervals to detect correlation between values and their predefined limits,
g) indicating a corrective action.

Preferably, obtained data are drive signals in a form of bitfields, preferably the bitfields describe a torque limit status and/or a speed limit status and/or a voltage and/or a temperature and/or a current.

In one of the embodiments of the invention, the bitfields provide at least an information on the following: Speed ctl max torque, Speed ctl min torque, Maximum speed, Minimum speed, Maximum frequency, Minimum frequency, Switching Frequency, Maximum load angle, Motor pullout, Undervoltage, Overvoltage, Torq lim, Minimum torque, Maximum torque, Torq ref max, Torq ref min, Tlim max speed, Tlim min speed, Internal current, Thermal, Max current, User current, Thermal IGBT, IGBT overtemperature, IGBT overload..

In one embodiment, results show at the same time the torque limit status and/or the speed limit status, or another pair of variables.

In yet another embodiment, comprising step h) of showing results of obtained data of drive signals in the form of bitfields, performed after step c).

In one embodiment, results are shown in a form of 2D heat map and/or 3D histograms and/or 2D histograms.

Obtaining the total number of clock cycles is realized by a counter.

Preferably, tracking one or multiple data values which are beyond limits.

In yet another embodiment, there are alarm limits determining which values are currently outside of the predefined limits.

In one embodiment, determining which limits are related to other limits.

Values are indirect and direct where indirect variables are a temperature of the electric motor or a temperature of power semiconductors and direct variables are torque or speed.

In one of the embodiments of the invention, the correction actions comprise fixing a setpoint, sending a maintenance crew for an intervention, returning and replanning production schedules.

In one of the preferred embodiments, comprising steps i) implementing received data to Machine Learning model, and j) estimating a trip prevention and maintenance planning, performed after step d.

According to a second aspect of the present invention there is provided a computer program product comprising instructions which, when the program is executed by a computer, cause the computer to carry put the method.

According to a third aspect of the present invention there is provided a computer readable medium comprising instruction which, when executed by a computer, cause the computer to carry out the method.

### ADVANTAGEOUS EFFECTS

Such method of tracking the operating limits of the drive, fraction of time a drive spends with any of the limits active, as well as the total fraction of time the drive spends operating outside the normal zone allow to obtain precise information about the operation and the health of the device. It provides more complete information to diagnose potential and actual problems that drive meets. This method allows for measuring the reliability and evaluating the safety margins by comparing the guarantees made to the customers and the actual performance. Knowledge about potential problems can cause lowering the warranty costs by reacting to developing problems before they become harmful.

### BRIEF DESCRIPTION OF THE DRAWINGS

The present disclosure will be now discussed with reference to the drawings, which show in:
Fig. 1- depicts a scheme for logging the fraction of time a drive spends over the limits,
Fig. 2 - depicts a table with limit statuses,
Fig. 3 - depicts a table with exemplary limits and limit values,
Fig. 4 - depicts a concept of a two-dimensional histogram showing the co-occurrence of various limit crossings.

### DETAILED DESCRIPTION OF THE DISCLOSURE

For a proper understanding of the disclosure, in the detailed description below. This invention relates to a monitoring system for a drive being at the same moment a diagnostic system.

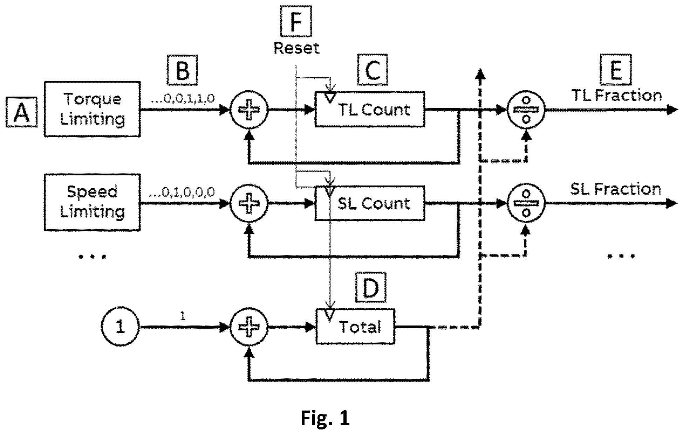

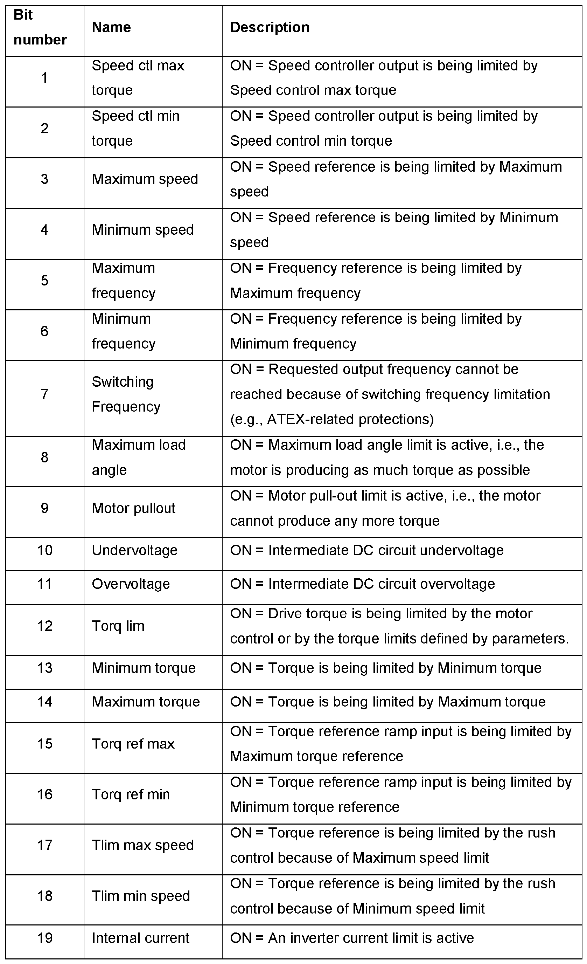

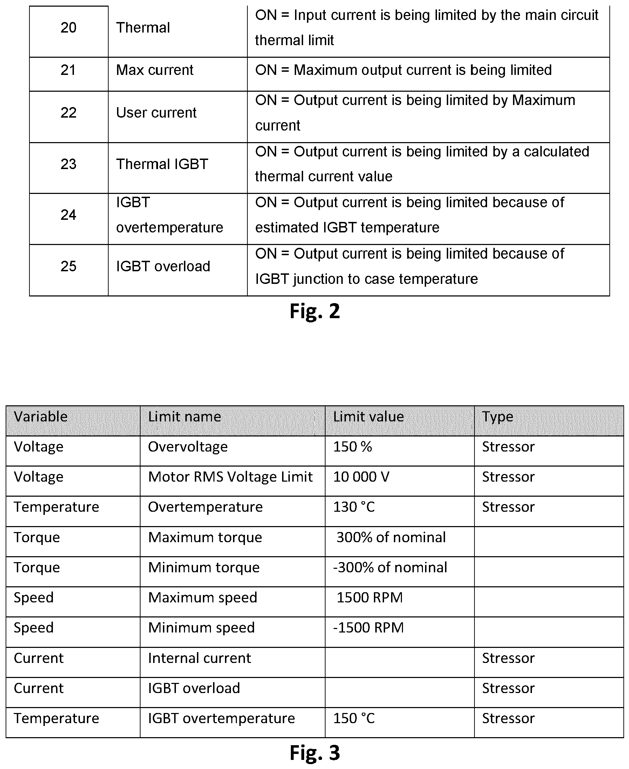

Motor controllers and drives are electrical or electronic devices that regulate motor speed, torque and position outputs. The drive modifies the power input to the motor to achieve the desired output. In this application, there are considered AC controllers and drives that are used in process applications to control the speed of pumps, fans, blowers, etc. The controller, integrated with the drive circuits, supplies the control signals to the drive. In other embodiment of the invention DC motor controllers and drives are used primarily to control motor speeds and torques for machine tools, electric vehicles, pumps, etc. The drive sends signals in the form of bit fields which describe the actual state of various limits. Fig. 1 presents a scheme for logging a fraction of time a drive spends over the limits. This invention relates mostly to torque and speed limits as major limits but the skilled person in the art will know how to use the presented invention to different kinds of limits, e.g., these described in Fig. 2.

In Fig. 1, each horizontal track represents the limiting status of one variable. Fig. 1 shows two variables (Torque Limiting above and Speed Limiting below). Other variables, e.g., those listed in Fig. 2 can follow. The first element A supplies a time-synchronous series of status bits B. With each clock cycle, newly arrived status is accumulated in the counter C. The overall number of elapsed time intervals is accumulated in the Total counter D. Fraction of time E spent outside of the limit is computed as the ratio of the outside of the limit counter C over the total elapsed time count D. When the counters need to be cleared, the Reset signal F is activated resetting all the counters.

The method for tracking the time of a drive outside limits comprises of:
a) obtaining a value and a number of data which is suitable to describe an actual state of various limits,
b) counting a total number of clock cycles,
c) receiving a fraction of time, a drive spends operating within or at predefined limits, and a fraction of time a drive spends operating outside predefined limits.
d) accumulating data values which are beyond predefined limits,
e) tracking data values which are beyond predefined limits
f) analyzing trends and changes of an obtained data in fixed time intervals to detect correlation between values and their predefined limits,
g) indicating a corrective action.

In this embodiment of the invention the obtained data in the form of values is bitfields which describe a torque limit status and/or a speed limit status and/or a voltage and/or a temperature and/or a current-as seen on Fig. 3. In this embodiment, each status can be represented by a bit with values ranging from 0 to 1 (OFF and ON).

In this embodiment of the invention, the bitfields provide at least an information on the following information: Speed ctl max torque, Speed ctl min torque, Maximum speed, Minimum speed, Maximum frequency, Minimum frequency, Switching Frequency, Maximum load angle, Motor pullout, Undervoltage, Overvoltage, Torq lim, Minimum torque, Maximum torque, Torq ref max, Torq ref min, Tlim max speed, Tlim min speed, Internal current, Thermal, Max current, User current, Thermal IGBT, IGBT overtemperature, IGBT overload.

Fig. 2 presents speed limiting related statuses represented as bits 1-25 of a bitfield. Each status is represented by a bit number and its value. Bit 1 (Speed ctl max torque) is ON when Speed controller output is being limited by Speed control max torque. Bit 2 (Speed ctl min torque) is ON when Speed controller output is being limited by Speed control min torque. Bit 3 (Maximum speed) is ON when Speed reference is being limited by Maximum speed. Bit 4 (Minimum speed) is ON when Speed reference is being limited by Minimum speed. Bit 5 (Maximum frequency) is ON when Frequency reference is being limited by Maximum frequency. Bit 6 (Minimum frequency) is ON when Frequency reference is being limited by Minimum frequency. Bit 7 (Switching Frequency) is ON when Requested output frequency cannot be reached because of switching frequency limitation (e.g., ATEX-related protections). Bit 8 (Maximum load angle) is ON when Maximum load angle limit is active, i.e., the motor is producing as much torque as possible. Bit 9 (Motor pullout) is ON when Motor pull-out limit is active, i.e., the motor cannot produce any more torque. Bit 10 (Undervoltage) is ON when Intermediate DC circuit undervoltage. Bit 11 (Overvoltage) is ON when Intermediate DC circuit overvoltage.

Bit 12 (Torq lim) is ON when Drive torque is being limited by the motor control or by the torque limits defined by parameters. Bit 13 (Minimum torque) is ON when Torque is being limited by Minimum torque. Bit 14 (Maximum torque) is ON when Torque is being limited by Maximum torque. Bit 15 (Torq ref max) is ON when Torque reference ramp input is being limited by Maximum torque reference. Bit 16 (Torq ref min) is ON when Torque reference ramp input is being limited by Minimum torque reference. Bit 17 (Tlim max speed) is ON when Torque reference is being limited by the rush control because of Maximum speed limit. Bit 18 (Tlim min speed) is ON when Torque reference is being limited by the rush control because of Minimum speed limit. Bit 19 (Internal current) is ON when an inverter current limit is active. Bit 20 (Thermal) is ON when Input current is being limited by the main circuit thermal limit. Bit 21 (Max current) is ON when Maximum output current is being limited. Bit 22 (User current) is ON when Output current is being limited by Maximum current. Bit 23 (Thermal IGBT) is ON when Output current is being limited by a calculated thermal current value. IGBT is an insulated-gate bipolar transistor. Bit 24 (IGBT overtemperature) is ON when Output current is being limited because of estimated IGBT temperature. Bit 25 (IGBT overload) is ON when Output current is being limited because of IGBT junction to case temperature.

After obtaining whole data, the next step is counting a total number of cycles. In this embodiment of the invention, obtaining the number of bit fields or the total number of clock cycles is realized by a counter. When the counter tracks the total number of clock cycles, a fraction of time outside the limits can be computed. Bits indicating the instantaneous state of various limits with value 1, they increment the corresponding counters during a clock beat. Clock beat provides the synchronization. The received fraction of time gives information how much time the drive spends operating within or at predefined limits and operating outside predefined limits. If a large fraction of time is spent outside the limits, it can indicate that the process settings are incorrect, and the process is running in a sub-optimal manner. This information is used by operator/maintenance specialist.

Limits are related to certain signals. The values of the limits depend on a particular drive type. The limits can be configurable via drive's parameters. Counters need to be periodically reset. Continuous accumulation of bits which operate outside predefined limits leads to decreased sensitivity. The frequency of resetting depends on how fast counters get filled and a time scale of interest.

The received data indicating values of data which are beyond predefined limits an accumulated and tracked. In this embodiment of the invention one or multiple values of data which are beyond limits are tracked. Tracking is conducted parallelly in order to discover similarities between different limits. It is discovered which limits have a tendency to be crossed at the same time what helps to determine if certain variables and their limits are related to others. Tracking similarities can be conducted in two ways. First one is to first extract the limit bits for multiple variables and then to track a group together. The second is to track multiple variables before checking them against the limits. Then the limits have a form of multi-dimensional blobs on a N-dimensional histogram.

In this embodiment values are indirect and direct where indirect variables are temperature of the electric motor or temperature of power semiconductors and direct variables are torque or speed. In this embodiment there are alarm limits determining which values are currently outside of the predefined limits. Fig. 3 depicts examples of limits and their limit values.

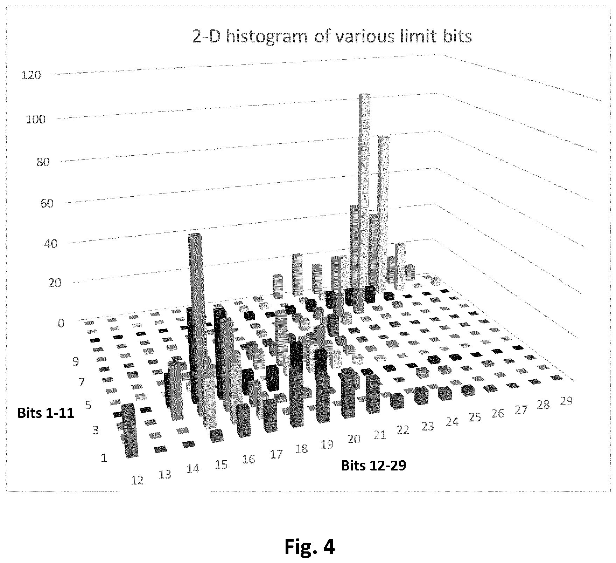

The received data is then analyzed in fixed time intervals. In this embodiment of the invention, it comprises step h) of showing results of obtained data of drive signals are shown in the form of bitfields. Accumulated data in this embodiment is presented at the same time showing simultaneously the torque limit status and the speed limit status or another pair of variables. The person skilled in the art should be aware that in the state of the art there exist many ways of presenting final data. This embodiment presents results which are shown in a form of 2D heat map or 3D histograms or 2 histograms. Fig. 4 presents 2D histogram showing a co-occurrence of various limit crossings. A concept of tracking multiple limit bits at the same time allows to show which limits have a tendency to be crossed at the same time and to determine if certain limits are related to others. Such presentation helps to visualize which limits are related to other limits and to detect correlation between variables and their predefined limits.

The results can be analyzed for trends or changes in fixed time intervals. Both the original diagram as well as the evolution over time can be correlated with other parameters collected, particularly with alarm or trip events. This forms the basis for training artificial intelligence for assisting in trip prevention and maintenance planning. The collected operational data is also available for prediction of remaining useful lifetime of driven electric motors and mechanical elements in the controlled process, as the operation in limits usually rules such life-time assessments.

Signals which overload the system are stressors. Analyzing trends and changes of an obtained data allows for indicating a corrective action. In this embodiment the correction actions comprise fixing a setpoint, sending a maintenance crew for intervention, returning and replanning production schedules.

The collected data may be analyzed for trends or changes in, for example, fixed time intervals, however the intervals may have different time as long as the time of occurrence and a value is known. Data in diagrams and an evolution over time can be correlated with other collected parameters especially with alarm or trip events generated for example within the control system and are indicative of drive-related problems and unwanted stops. Such data that is received during the application of the method being subject of the invention and any additional data are basis for training artificial intelligence model. In this embodiment the invention comprises step i) after step d) of implementing the received data to Machine Learning model and then needed calculations are estimated. This embodiment of the invention comprises step j) of estimating a trip prevention and a maintenance planning. The collected operational data is also available for prediction of remaining useful lifetime of driven electric motors and mechanical elements in the controlled process. Operation above rated power causes stress beyond the motor design and may result in a reduction of motor life.

The invention discloses a computer program product which comprises instructions causing a computer to carry out the above-mentioned method. The computer program product works when is executed by the computer. The invention discloses a computer readable medium which comprises instruction allowing the computer to carry out the above-mentioned method of tracking the time of a drive outside limits.

## Claims

1. A method for tracking the time of a drive outside limits comprising of:
a) obtaining a value and a number of data which is suitable to describe an actual state of various limits,
b) counting a total number of clock cycles,
c) receiving a fraction of time, the drive spends operating within or at predefined limits, and a fraction of time the drive spends operating outside predefined limits,
d) accumulating data values which are beyond predefined limits,
e) tracking data values which are beyond predefined limits,
f) analyzing trends and changes of an obtained data in fixed time intervals to detect correlation between values and their predefined limits,
g) indicating a corrective action.

2. The method according to claim 1, **wherein** obtained data are drive signals in a form of bitfields, preferably the bitfields describe a torque limit status and/or a speed limit status and/or a voltage and/or a temperature and/or a current.

3. The method according to claim 1 or 2, **wherein** the bitfields provide at least an information on the following: Speed ctl max torque, Speed ctl min torque, Maximum speed, Minimum speed, Maximum frequency, Minimum frequency, Switching Frequency, Maximum load angle, Motor pullout, Undervoltage, Overvoltage, Torq lim, Minimum torque, Maximum torque, Torq ref max, Torq ref min, Tlim max speed, Tlim min speed, Internal current, Thermal, Max current, User current, Thermal IGBT, IGBT overtemperature, IGBT overload..

4. The method according to any claim 1-3, **wherein** results show at the same time the torque limit status and/or the speed limit status, or another pair of variables.

5. The method according to any claim 1-4, **wherein** comprising step h) of showing results of obtained data of drive signals in the form of bitfields, performed after step c).

6. The method according to any claim 4-5, **wherein** results are shown in a form of 2D heat map and/or 3D histograms and/or 2D histograms.

7. The method according to any of the previous claims, **wherein** obtaining the total number of clock cycles is realized by a counter.

8. The method according to any of the previous claims, **wherein** tracking one or multiple data values which are beyond limits.

9. The method according to any of the previous claims, **wherein** there are alarm limits determining which values are currently outside of the predefined limits.

10. The method according to any of the previous claims, **wherein** determining which limits are related to other limits.

11. The method according to any of the previous claims, **wherein** values are indirect and direct where indirect variables are a temperature of the electric motor or a temperature of power semiconductors and direct variables are torque or speed.

12. The method according to any of the previous claims, **wherein** the correction actions comprise fixing a setpoint, sending a maintenance crew for an intervention, returning and replanning production schedules.

13. The method according to any of the previous claims, **wherein** comprising steps i) implementing received data to Machine Learning model, and j) estimating a trip prevention and maintenance planning, performed after step d.

14. A computer program product comprising instructions which, when the program is executed by a computer, cause the computer to carry put the method of anyone of claims 1-13.

15. A computer readable medium comprising instruction which, when executed by a computer, cause the computer to carry out the method of anyone of claims 1-13.
